# EUROPÄISCHE PATENTANMELDUNG

(11) **EP 3 967 429 A1**
(43) Veröffentlichungstag der Anmeldung: **16.03.2022**
(21) Anmeldenummer: 20195792.5
(22) Anmeldetag: 11.09.2020
(51) Int. Cl.: B22F 10/66, B22F 12/30, B33Y 30/00, B33Y 40/20

(54) **ABTRENNVORRICHTUNG, ADDITIVE FERTIGUNGSMASCHINE MIT DER ABTRENNVORRICHTUNG, ABTRENNVERFAHREN UND ADDITIVES FERTIGUNGSVERFAHREN MIT DEM ABTRENNVERFAHREN**

(71) Anmelder: Siemens Aktiengesellschaft, 80333 München (DE)
(72) Erfinder: Ceriani, Nicola Maria, 91056 Erlangen (DE); Schneider, Heinz-Ingo, 85598 Baldham (DE)

(57) **Zusammenfassung**

Die Erfindung betrifft eine Abtrennvorrichtung (1) zur Abtrennung eines mittels additiver Fertigung herstellbaren Bauteils (2) von einer Aufbauplatte (3), aufweisend die Aufbauplatte (3) und einen Schwingungserzeuger (4), wobei das AMF-Bauteil (2) auf einer Aufbaufläche (5) der Aufbauplatte (3) herstellbar und mit der Aufbaufläche (5) anhaftend verbindbar ist, wobei die Aufbauplatte (3) mittels des Schwingungserzeugers (4) auf Basis einer elektrischen Schwingung in eine mechanische Schwingung (6) versetzbar ist und wobei mittels der mechanischen Schwingung (6) das Bauteil (2) von der Aufbaufläche (5) abtrennbar ist. Weiterhin betrifft die Erfindung eine additive Fertigungsmaschine (20) mit der Abtrennvorrichtung (1), ein Abtrennverfahren (28) für die Abtrennvorrichtung (1) und ein additives Fertigungsverfahren (34) mit dem Abtrennverfahren (28) für die additive Fertigungsmaschine (20) .

## Beschreibung

Die Erfindung betrifft eine Abtrennvorrichtung zur Abtrennung eines mittels additiver Fertigung herstellbaren Bauteils von einer Aufbauplatte. Weiterhin betrifft die Erfindung eine additive Fertigungsmaschine mit der Abtrennvorrichtung, ein Abtrennverfahren für die Abtrennvorrichtung und ein additives Fertigungsverfahren mit dem Abtrennverfahren für die additive Fertigungsmaschine.

Bei additiven Herstellungsverfahren im Kontext von 3D-Druck/ Additive Manufacturing (AM), wie z.B. dem Powder Bed Fusion (PBF), auch bekannt als Selective Laser Melting (SLM) - Selektives Laserschweißen -, werden Bauteile aus Materialien wie Metall oder Kunststoff mittels additiven Auftragens des Materials auf eine Bauplatte hergestellt.

Charakteristisch für additive Herstellungsverfahren, auch AM-Verfahren genannt, ist demnach meist, dass das Material, oft in Form eines Pulvers oder Granulats, mittels eines Verteilungs- bzw. Abstreichwerkzeugs, welches auch als Rakel bezeichnet wird, von einem Vorratsbehälter auf die Bauplatte transportiert und in einer definierten Schichtdicke dort abgelegt wird.

Am Beispiel des selektiven Laserschweißen als AM-Verfahren wird ein fokussierter Laserstrahl, der durch eine Spiegeleinheit ähnlich einem Scanner bewegt und positioniert wird, über das schichtweise auf der Bauplatte verteilte Material geführt, wobei das Material in vorbestimmten Bereichen schmilzt bzw. umschmilzt und nach erkalten das Bauteil ausbildet.

Nach dem Aufbauprozess haftet das derart erzeugte Bauteil aufgrund des Schmelzprozesses und der damit verbundenen Wärmeentwicklung im Allgemeinen fest auf der Oberfläche der Aufbauplatte. Nach der Entfernung des nicht vom Schmelzvorgang, also der Lasereinwirkung betroffenen Materials muss das erzeugte und an der Aufbauplatte anhaftende Bauteil in der Regel von der Aufbauplatte mechanisch getrennt werden.

Das Abtrennen des Bauteils geschieht häufig durch manuelle Prozesse wie absägen, abschneiden oder auch erodieren der an der Aufbaufläche haftenden Verbindungsschicht zum Bauteil.

Diese Vorgehensweise ist aus Sicht des Herstellungsprozesses meist aufwändig, da beispielsweise das an der Aufbauplatte anhaftende Bauteil ggf. mit der Aufbauplatte in einen gesonderten Fertigungsbereich überführt werden muss.

Hier erfolgt die Abtrennung des Bauteils von der Aufbauplatte an separaten Bearbeitungsplätzen mittels dafür geeigneter Maschinen, wobei oftmals auch eine Nachbearbeitung an der von der Aufbauplatte mit herkömmlichen Abtrennverfahren abgetrennten Oberfläche des Bauteils notwendig wird.

Neben den Kosten, welche eine derartige Bauteil-Abtrennung grundsätzlich verursacht, ist für den Hersteller insbesondere der zusätzliche logistische Aufwand und die damit verbundene hohe Durchlaufzeit von der Konstruktion bis zum Vorliegen des finalen Bauteils ein Nachteil im gesamten Produktionsprozess.

Besonders für AM-Verfahren, deren Durchlaufzeit für die Herstellung des Bauteils Stunden bis hin zu Tagen betragen kann, besteht oftmals die Forderung nach Verkürzung der Herstellungszeit in Bezug auf die Bauteil-Abtrennung.

Der Erfindung liegt daher die Aufgabe zugrunde, eine Abtrennvorrichtung, eine additive Fertigungsmaschine mit der Abtrennvorrichtung, ein Abtrennverfahren und ein additives Fertigungsverfahren mit dem Abtrennverfahren vorzuschlagen, welche den Herstellungsprozess bei zumindest gleichbleibender Qualität eines mittels additiver Fertigungsverfahren produzierten Bauteils verbessern.

Die Aufgabe wird durch eine Abtrennvorrichtung mit den in Anspruch 1 angegebenen Merkmalen, durch eine additive Fertigungsmaschine mit den in Anspruch 11 angegebenen Merkmalen, durch ein Abtrennverfahren mit den in Anspruch 13 angegebenen Merkmalen und ein additives Fertigungsverfahren mit den in Anspruch 15 angegebenen Merkmalen gelöst.

Für die Lösung der Aufgabe wird eine Abtrennvorrichtung zur Abtrennung eines mittels additiver Fertigung herstellbaren Bauteils von einer Aufbauplatte vorgeschlagen, welche die Aufbauplatte und einen Schwingungserzeuger aufweist, wobei das Bauteil auf einer Aufbaufläche der Aufbauplatte herstellbar und mit der Aufbaufläche anhaftend verbindbar ist, wobei die Aufbauplatte mittels des Schwingungserzeugers auf Basis einer elektrischen Schwingung in eine mechanische Schwingung versetzbar ist und wobei mittels der mechanischen Schwingung das Bauteil von der Aufbaufläche abtrennbar ist.

Der Schwingungserzeuger ist in vorteilhafter Weise ausgebildet, auf Basis der elektrischen Schwingung eine Resonanzschwingung zur mechanischen Schwingungsanregung der Aufbauplatte mittels einer Resonanzfrequenz oder einem Vielfachen der Resonanzfrequenz anzuregen, so dass ein Losbrechmoment zur Abtrennung des an der Aufbaufläche der Aufbauplatte anhaftenden Bauteils erzeugbar ist.

Die an der Aufbauplatte wirksame mechanische Schwingung wird derart dimensioniert, dass das herzustellende Bauteil selbst nicht beschädigt wird, sondern die haftende Verbindung zwischen Bauteil und Aufbauplatte abgetrennt und das Bauteil von der Aufbaufläche der Aufbauplatte losgelöst wird.

Diese haftende Verbindung kann z.B. als eine Oberflächenverbindung ausgebildet sein, wobei sich eine Oberfläche des Bauteils mit der Aufbaufläche der Aufbauplatte aufgrund der Oberflächenrauheit ihrer Materialien aus Sicht einer vergrößerten Betrachtung gleichsam verzahnt, oder als stoffschlüssige Verbindung ausbildet sein, wobei zumindest die Oberfläche des Bauteils und die Aufbaufläche der Aufbauplatte durch atomare oder molekulare Kräfte zwischen ihren Materialien zusammengehalten werden.

Die in die mechanische Schwingung versetzbare Aufbauplatte kann während der Abtrennung des Bauteils auch von Produktionsrückständen, welche nach der Herstellung des Bauteils auf der Aufbauplatte verbleibbar sind, gereinigt werden.

Vorteilhafte Ausgestaltungsformen der Abtrennvorrichtung sind in den abhängigen Ansprüchen angegeben.

Bei einer ersten vorteilhaften Ausgestaltungsform der Abtrennvorrichtung sind die elektrische Schwingung und die mechanische Schwingung vom Schwingungserzeuger als Ultraschallschwingungen insbesondere in einem Frequenzbereich von 15kHz bis 60kHz erzeugbar.

Hochfrequente Schwingung der Aufbauplatte, wie die mittels Ultraschalls, verbessern vorteilhaft das Losbrechen und somit die Abtrennung des Bauteils von der Aufbaufläche der Aufbauplatte, insbesondere bei Erreichen der Resonanzschwingung zwischen Schwingungserzeuger und Aufbauplatte im Frequenzbereich 15kHz bis 60kHz.

Bei einer weiteren vorteilhaften Ausgestaltungsform der Abtrennvorrichtung weist der Schwingungserzeuger einen elektrischen Schwingungsgenerator zur Erzeugung der elektrischen Schwingung und einen Schwingungskonverter zur Umwandlung der elektrischen Schwingung in die mechanische Schwingung auf.

Der mittels elektrischer Energie betreibbare elektrische Schwingungsgenerator stellt in vorteilhafter Weise die elektrische Schwingung für den Schwingungskonverter auch als variabel einstellbare elektrische Schwingung bereit. Der Schwingungskonverter ist daher auch ausgebildet, diese variable einstellbare elektrische Schwingung derart in die mechanische Schwingung zu wandeln, dass die mechanische Schwingung, der elektrischen Schwingung folgend, ebenfalls variabel ist.

Für die Umwandlung der elektrischen Schwingung in die mechanische Schwingung können bei Schwingungskonverter beispielsweise die Wirkungsprinzipien der Piezoelektrizität oder der Magnetostriktion zum Einsatz kommen.

Bei einer weiteren vorteilhaften Ausgestaltungsform der Abtrennvorrichtung weist der Schwingungserzeuger einen mechanischen Schwingungstransformator zur Veränderung einer Schwingungsamplitude der mechanischen Schwingung insbesondere für einen Amplitudenbereich von 2µm bis 50pm auf.

Die Veränderung der Schwingungsamplitude kann insbesondere in Abhängigkeit der Frequenz der mechanischen Schwingung das Losbrechmoment und das Abtrennen des Bauteils von der Aufbaufläche der Aufbauplatte verstärken oder schwächen. Diese Variabilität ist dann beispielsweise vorteilhaft, falls für das jeweils abzutrennende Bauteil aus verschiedenen Materialien herstellbar ist und somit auch verschiedene Kräfte bei der Abtrennung des jeweiligen Bauteils wirken müssen, ohne das Bauteil zu zerstören.

Bei einer weiteren vorteilhaften Ausgestaltungsform der Abtrennvorrichtung weist der Schwingungserzeuger eine Sonotrode auf, welche ausgebildet ist, die mechanische Schwingung von dem Schwingungskonverter und, falls vorhanden, über den mechanischen Schwingungstransformator an die Aufbauplatte zu übertragen.

Die Sonotrode stellt die Verbindung des Schwingungserzeugers zur Aufbauplatte für die Einleitung der mechanischen Schwingung in die Aufbauplatte her, wobei sie die mechanische Schwingung vom Schwingungskonverter oder, falls vorhanden, vom Schwingungstransformator übernimmt und weiterleitet.

Besonders vorteilhaft ist das Einleiten der mechanischen Schwingungen als Ultraschallschwingung in die Aufbauplatte zur Erzeugung der Resonanzschwingungen.

Die Sonotrode ist demnach ein Werkzeug, welches insbesondere in Bezug auf die Bauform der Aufbauplatte zur gezielten Einleitung der mechanischen Schwingung in die Aufbauplatte ausgewählt werden kann.

Der Einsatz von Sonotroden ist beispielsweise auch bekannt beim Ultraschallschweißen oder beim Ultraschallschwingläppen (Ultraschallbohren).

Bei einer weiteren vorteilhaften Ausgestaltungsform der Abtrennvorrichtung ist die Aufbauplatte als Sonotrode ausgebildet.

Die Aufbauplatte kann demnach zumindest auch die Funktionalität und die Eigenschaften der Sonotrode übernehmen. Der Aufbau und die räumliche Anordnung der Abtrennvorrichtung kann so in vorteilhafter Weise derart ausgelegt werden, dass die Abtrennvorrichtung kompakt und damit platzsparend in Produktionsmaschinen für AM-Verfahren eingesetzt werden kann.

Bei einer weiteren vorteilhaften Ausgestaltungsform der Abtrennvorrichtung ist eine Stützstruktur an dem Bauteil auf der Aufbaufläche der Aufbauplatte ausbildbar und ist das Bauteil mittels der Stützstruktur mit der Aufbaufläche der Aufbauplatte anhaftend verbindbar.

Das Bauteil und die dazugehörige Stützstruktur sind demnach während des Herstellungsvorgangs gemeinsam produzierbar, wobei vorteilhaft ist, dass das produzierte Bauteil nicht unmittelbar an der Aufbaufläche der Aufbauplatte haftet. Bei der Abtrennung des Bauteils über die Stützstruktur von der Aufbaufläche ist die Gefahr einer Beschädigung des Bauteils somit geringer, da die Stützstruktur eine Pufferzone bildet.

Umfang und Form der Stützstruktur richten sich im Wesentlichen nach ihrer Funktion, einen ausreichenden Abstand zwischen dem Bauteil und der Aufbaufläche der Aufbauplatte vorzuhalten, so dass das Bauteil nicht unmittelbar mit der Aufbaufläche der Aufbauplatte haftend verbindbar ist.

Bei einer weiteren vorteilhaften Ausgestaltungsform der Abtrennvorrichtung ist die Stützstruktur mittels der mechanischen Schwingung zerstörbar und das Bauteil von der Aufbaufläche der Aufbauplatte abtrennbar.

Die zu erzeugende Stützstruktur ist für die Herstellung gemeinsam mit dem Bauteil derart auszulegen, dass die mittels der mechanischen Schwingung zum Schwingen angeregte Aufbauplatte die Stützstruktur, nicht aber das Bauteil zerstört oder beschädigt

Bei einer weiteren vorteilhaften Ausgestaltungsform der Abtrennvorrichtung ist eine Schwingungsausrichtung der mechanischen Schwingung der Aufbauplatte mittels Anordnung des Schwingungskonverters oder, falls vorhanden, der Sonotrode in Bezug auf eine zur Aufbaufläche der Aufbauplatte orthogonal ausgerichtete Schwingungsachse in eine longitudinale Schwingung oder in eine transversale Schwingung oder in eine koaxiale Schwingung erzeugbar.

Die orthogonal zur Aufbaufläche der Aufbauplatte ausgerichtete Schwingungsachse ist dabei eine durch die Aufbauplatte gehende gedachte Linie.

Die effizienteste Wirkung zur Abtrennung des Bauteils und, falls vorhanden, der Stützstruktur erscheint die longitudinale Schwingung hervorzurufen. Jedoch können z.B. Anforderungen an eine spezifische räumliche Anordnung der Abtrennvorrichtung innerhalb einer Produktionsmaschine auch die transversale oder koaxiale Schwingung als geeignetere Lösung vorsehen. Bei einer weiteren vorteilhaften Ausgestaltungsform der Abtrennvorrichtung weist der Schwingungserzeuger mindestens einen weiteren Schwingungskonverter zur Umwandlung der elektrischen Schwingung in die mechanische Schwingung auf.

Diese Ausgestaltungsform ist insbesondere dann vorteilhaft, wenn die Schwingungsanregung der Aufbauplatte mittels der mechanischen Schwingung über mehrere Stellen an der Aufbauplatte verteilt werden soll. So kann die mechanische Schwingung gleichmäßiger an der Aufbauplatte verteilt und insbesondere die Resonanzschwingung besser ihre Wirkung zur Abtrennung des Bauteils und, falls vorhanden, der Stützstruktur entfalten.

Für die Lösung der Aufgabe wird weiterhin eine additive Fertigungsmaschine zum selektiven Laserschmelzen mit der erfindungsgemäßen Abtrennvorrichtung, einem Vorratsbehälter für ein Schmelzmedium, einem Transportmittel zum Transport des Schmelzmediums vom Vorratsbehälter zur Aufbaufläche der Aufbauplatte, einem Lasererzeuger zur Erzeugung eines Laserstrahls und einer Ablenkvorrichtung zur Ablenkung des Laserstrahls auf dem Schmelzmedium der Aufbaufläche vorgeschlagen.

Der Vorratsbehälter ist mit dem Schmelzmedium befüllbar, welches als Material für die Herstellung des Bauteils und, falls vorhanden, für die Herstellung der Stützstruktur Verwendung findet. Das Schmelzmedium kann vor einem Schmelzvorgang beispielsweise in Pulverform oder als Granulat ausgebildet ist.

Das Transportmittel ist dazu ausgebildet, eine bestimmte Menge des Schmelzmediums vom Vorratsbehälter zur Aufbaufläche der Aufbauplatte zu befördern. Der Lasererzeuger kann einen Laserstrahl erzeugen, wobei der Laserstrahl durch die Ablenkvorrichtung über vorbestimmte Stellen des Schmelzmediums ablenkbar ist und an diesen Stellen das Schmelzmedium schmelzbar ist. Die so schmelzbaren Stellen des Schmelzmediums bilden nach erkalten das Bauteil und, falls vorhanden, die Stützstruktur aus.

Mittels der Abtrennvorrichtung ist das erzeugbare Bauteil und, falls vorhanden, die erzeugbare Stützstruktur von der Aufbaufläche der Aufbauplatte abtrennbar.

Die additive Fertigungsmaschine zum selektiven Laserschmelzen steht hier beispielhaft für weitere Produktionsmaschinen im Kontext 3D-Druck/ Additive Manufacturing, wie zum selektiven Lasersintern, zum 3D-Siebdruck etc., bei denen die erfindungsgemäße Abtrennvorrichtung eingesetzt werden kann.

Bei einer vorteilhaften Ausgestaltungsform der additiven Fertigungsmaschine weist das Transportmittel eine Transportplatte und eine Verteilungseinheit für das Schmelzmedium auf.

Über die Transportplatte ist das Schmelzmedium mittels der Verteilungseinheit von dem Vorratsbehälter zur Aufbaufläche der Aufbauplatte beförderbar, wobei die Verteilungseinheit vorteilhaft ausgebildet ist, das Schmelzmedium lagenweise auf der Aufbaufläche der Aufbauplatte zu verteilen.

Für die Lösung der Aufgabe wird ebenfalls ein Abtrennverfahren für die erfindungsgemäße Abtrennvorrichtung vorgeschlagen, mit den Schritten einer Bauteilherstellung, wobei das Bauteil auf der Aufbaufläche der Aufbauplatte hergestellt wird und an der Aufbaufläche anhaftet, einer Schwingungserzeugung, wobei die mechanische Schwingung der Aufbauplatte auf Basis der elektrischen Schwingung mittels des Schwingungserzeugers erzeugt wird, und einer Bauteilabtrennung, wobei das Bauteil von der Aufbaufläche mittels der mechanischen Schwingung abgetrennt wird.

Bei einer vorteilhaften Ausgestaltungsform des Abtrennverfahrens werden die Schritte einer Stützstrukturausbildung, wobei an dem Bauteil die Stützstruktur ausgebildet wird und das Bauteil mittels der Stützstruktur mit der Aufbaufläche anhaftend verbunden ist, und einer Stützstrukturzerstörung, wobei die Stützstruktur mittels der mechanischen Schwingung zerstört und das Bauteil von der Aufbaufläche abgetrennt wird, vorgeschlagen.

Für die Lösung der Aufgabe wird auch ein additives Fertigungsverfahren zum selektiven Laserschmelzen mit dem erfindungsgemäßen Abtrennverfahren für die additive Fertigungsmaschine vorgeschlagen, mit den Schritten eines Schmelzmitteltransports, wobei das Schmelzmedium durch das Transportmittel vom Vorratsbehälter zur Aufbaufläche der Aufbauplatte transportiert wird, einer Lasererzeugung, wobei mittels des Lasererzeugers der Laserstrahl erzeugt wird, und einer Laserstrahlablenkung, wobei mittels einer Ablenkvorrichtung der Laserstrahl auf dem Schmelzmedium der Aufbaufläche abgelenkt und das Bauteil und, falls vorgesehen, die Stützstruktur hergestellt wird.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die im Zusammenhang mit den Figuren näher erläutert werden. Es zeigt:
- FIG 1: eine schematische Darstellung der erfindungsgemäßen Abtrennvorrichtung,
- FIG 2: eine erste schematische Detaildarstellung der Schwingungsausrichtung von Schwingungserzeuger und Aufbauplatte gemäß der Abtrennvorrichtung nach FIG 1,
- FIG 3: eine zweite schematische Detaildarstellung der Schwingungsausrichtung von Schwingungserzeuger und Aufbauplatte gemäß der Abtrennvorrichtung nach FIG 1,
- FIG 4: eine dritte schematische Detaildarstellung der Schwingungsausrichtung von Schwingungserzeuger und Aufbauplatte gemäß der Abtrennvorrichtung nach FIG 1,
- FIG 5: eine schematische Darstellung der erfindungsgemäßen additiven Fertigungsmaschine zum selektiven Laserschmelzen mit der Abtrennvorrichtung nach FIG 1 bis FIG 4,
- FIG 6: ein Struktogramm des erfindungsgemäßen Abtrennverfahrens für die Abtrennvorrichtung nach FIG 1 bis 4 und
- FIG 7: ein Struktogramm des erfindungsgemäßen additiven Fertigungsverfahrens zum selektiven Laserschmelzen mit dem Abtrennverfahren nach FIG 6 für die additiven Fertigungsmaschine nach FIG 5.

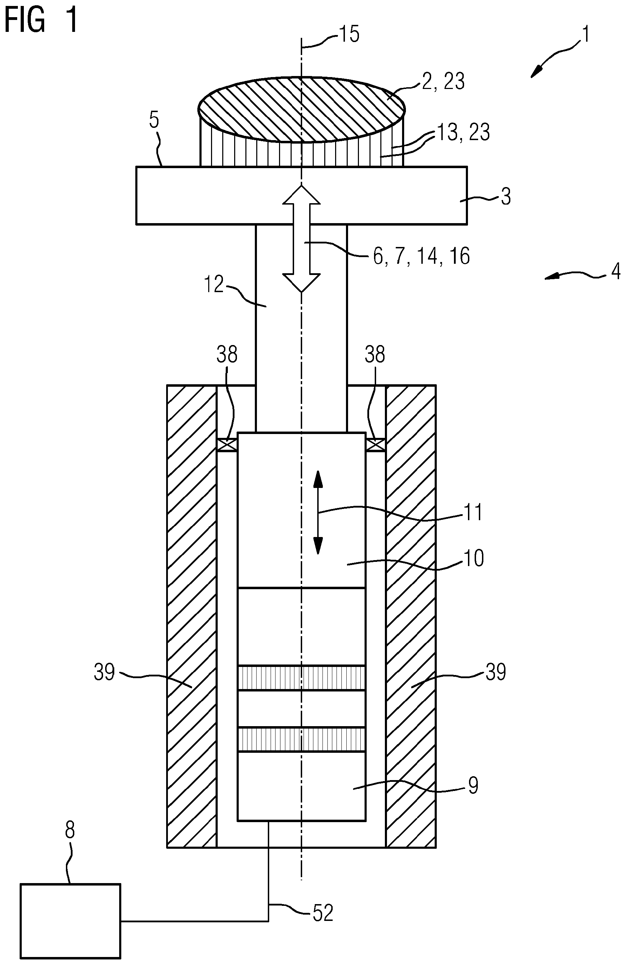

Die FIG 1 zeigt eine schematische Darstellung der erfindungsgemäßen Abtrennvorrichtung 1.

Ein mittels additiver Fertigung auf einer Aufbauplatte 3 aus einem Schmelzmedium 23 hergestelltes Bauteil 2 ist über eine Stützstruktur 13, welche ebenfalls aus dem Schmelzmedium 23 auf der Aufbauplatte 3 hergestellt wurde, mit einer Aufbaufläche 5 der Aufbauplatte 3 haftend verbunden.

Die Aufbauplatte 3 wird für die Abtrennung des Bauteils 2 von der Aufbauplatte 3 mittels eines Schwingungserzeugers 4 auf Basis einer elektrischen Schwingung in eine mechanische Schwingung 6 versetzt.

Sowohl die elektrische Schwingung wie auch die mechanische Schwingung 6 sind jeweils als eine Ultraschallschwingung 7 (für die elektrische Schwingung in FIG 1 nicht gezeigt) insbesondere in einem Frequenzbereich von 15kHz bis 60kHz ausgebildet.

Die elektrische Schwingung, üblicherweise basierend auf einem Wechselstrom, wird mittels eines elektrischen Schwingungsgenerators 8 des Schwingungserzeugers 4 erzeugt und von einem elektrischen Übertragungsmittel 52 (z.B. einer geschirmten elektrischen Leitung) an einen Schwingungskonverter 9 des Schwingungserzeugers 4 übertragen.

Der Schwingungskonverter 9 wandelt die elektrische Schwingung als Ultraschallschwingung beispielsweise mittels eines piezoelektrischen oder eines magnetostriktiven Effekts in die mechanische Schwingung 6 als Ultraschallschwingung 7 um.

Ein mechanischer Schwingungstransformator 10 des Schwingungserzeugers 4 ist dazu ausgebildet, die vom Schwingungskonverter 9 ausgehende mechanische Schwingung 6 in ihrer Schwingungsamplitude 11 insbesondere in einem Amplitudenbereich von 2µm bis 50pm zu verändern.

Der Schwingungserzeuger 4 weist eine Sonotrode 12 auf, welche die mechanische Schwingung 6 als Ultraschallschwingung 7 vom mechanischen Schwingungstransformator 10 an die Aufbauplatte 3 in einer Schwingungsausrichtung 14 einer longitudinalen Schwingung 16 gegenüber einer zur Aufbaufläche 5 der Aufbauplatte 3 senkrecht stehenden Schwingungsachse 15 überträgt. Die Schwingungsachse 15 ist eine nicht materialisierte, gedachte Linie, welche lediglich zur Verdeutlichung der Schwingungsausrichtung 14 der Aufbauplatte 3 vorgesehen ist.

Die Sonotrode 12 ist an einer von einer Seite mit der Aufbaufläche 5 gegenüberliegenden Seite angeordnet und stellt die Verbindung des Schwingungserzeugers 4 zur Aufbauplatte 3 her, um die mechanische Schwingung 6 in die Aufbauplatte 3 einzuleiten und die Stützstruktur 13, und somit das Bauteil 2, von der Aufbaufläche 5 der Aufbauplatte 3 abzutrennen, wobei das Bauteil 2 keine Beschädigung erfährt, die Stützstruktur 13 aber vollständig zerstört werden kann.

Im Ausführungsbeispiel der FIG 1 ist der Schwingungserzeuger 4 mittels des Schwingungstransformators 10 über eine Lagerungsvorrichtung 38 mit einer Verankerungsvorrichtung 39 verbunden.

Der elektrische Schwingungsgenerator 8 ist in FIG 1 nicht unmittelbar am Schwingungskonverter 9 angeordnet und kann somit deutlich vom Schwingungskonverter 9 beabstandet sein.

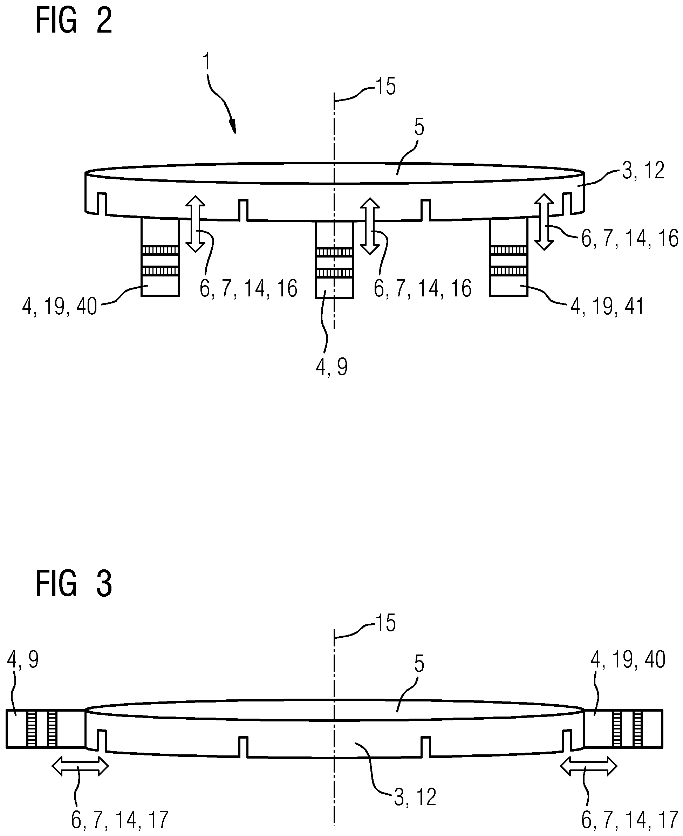

Mittels der FIG 2 wird eine erste schematische Detaildarstellung der Schwingungsausrichtung 14 von Schwingungserzeuger 4 und Aufbauplatte 3 gemäß der Abtrennvorrichtung 1 nach FIG 1 aufgezeigt.

Die Aufbauplatte 3, welche als Sonotrode 12 ausgebildet ist, wird mittels des Schwingungskonverters 9 und eines jeweils parallel zum Schwingungskonverter 9 angeordneten zweiten und dritten Schwingungskonverters 40,41 als weitere Schwingungskonverter 19 des Schwingungserzeugers 4 in die mechanische Schwingung 6 als Ultraschallschwingung 7 versetzt. Die Schwingungskonverter 9,40,41 sind dabei an der von der Seite mit der Aufbaufläche 5 gegenüberliegenden Seite angeordnet.

Alle drei Schwingungskonverter 9,40,41 erzeugen die mechanische Schwingung 6, welche an die als Sonotrode 12 ausgebildete Aufbauplatte 3 übertragen wird, in der Schwingungsausrichtung 14 der longitudinalen Schwingung 16 gegenüber der zur Aufbaufläche 5 der Aufbauplatte 3 senkrecht stehenden Schwingungsachse 15. Die Schwingungsachse 15 ist die nicht materialisierte, gedachte Linie, welche lediglich zur Verdeutlichung der Schwingungsausrichtung 14 der Aufbauplatte 3 vorgesehen ist.

Im Ausführungsbeispiel der FIG 2 wird auf einen Schwingungstransformator verzichtet, so dass die drei Schwingungskonverter 9,40,41 vorzugsweise synchron in jeweils eine gleiche Schwingungsrichtung der Schwingungsausrichtung 14 betrieben werden und die mechanische Schwingung 6 in die als Sonotrode 12 ausgebildete Aufbauplatte 3 unmittelbar einleiten.

In FIG 3 wird eine zweite schematische Detaildarstellung der Schwingungsausrichtung 14 zwischen Schwingungserzeuger 4 und Aufbauplatte 3 gemäß der Abtrennvorrichtung 1 nach FIG 1 gezeigt.

Die Aufbauplatte 3, welche als Sonotrode 12 ausgebildet ist, wird mittels des an einer Seite der Aufbauplatte 3 angeordneten Schwingungskonverters 9 und eines an einer zum Schwingungskonverter 9 auf einer entgegengesetzten Seite der Aufbauplatte 3 angeordneten zweiten Schwingungskonverter 40 als weiteren Schwingungskonverter 19 des Schwingungserzeugers 4 in die mechanische Schwingung 6, hier die Ultraschallschwingung 7, versetzt. Keiner der Schwingungskonverter 9,40 ist dabei an der Seite mit der Aufbaufläche 5 oder der der Aufbaufläche 5 gegenüberliegenden Seite angeordnet.

Die Schwingungskonverter 9,40 erzeugen die mechanische Schwingung 6, welche an die als Sonotrode 12 ausgebildete Aufbauplatte 3 übertragen wird, in der Schwingungsausrichtung 14 einer transversalen Schwingung 17 gegenüber der zur Aufbaufläche 5 der Aufbauplatte 3 senkrecht stehenden Schwingungsachse 15. Die Schwingungsachse 15 ist die nicht materialisierte, gedachte Linie, welche lediglich zur Verdeutlichung der Schwingungsausrichtung 14 der Aufbauplatte 3 vorgesehen ist.

Die beiden Schwingungskonverter 9, 40 werden in ihrer Schwingungsausrichtung 14 vorzugsweise derart betrieben, dass sie synchron in jeweils eine gleiche Schwingungsrichtung der Schwingungsausrichtung 14 zur Einleitung der mechanischen Schwingung 6 in die Aufbauplatte 3 wirken.

Im Ausführungsbeispiel der FIG 3 wird auf einen Schwingungstransformator verzichtet, so dass die synchron betreibbaren Schwingungskonverter 9,40 die mechanische Schwingung 6 in die als Sonotrode 12 ausgebildete Aufbauplatte 3 unmittelbar einleiten.

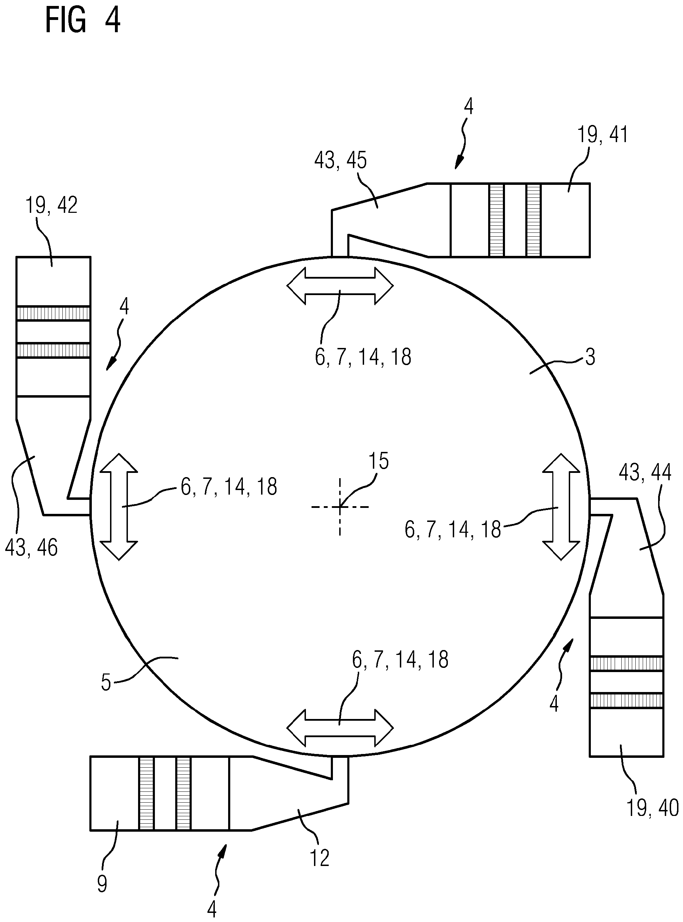

Mittels FIG 4 wird eine dritte schematische Detaildarstellung der Schwingungsausrichtung von Schwingungserzeuger und Aufbauplatte gemäß der Abtrennvorrichtung nach FIG 1 visualisiert.

Die Aufbauplatte 3 wird über am radialen Umfang der Aufbauplatte 3 angeordnete vier Sonotroden 12,44,45,46 des Schwingungserzeugers 4 in die mechanische Schwingung 6, hier die Ultraschallschwingung 7, versetzt. Keine der Sonotroden 12,44,45,46 ist dabei an der Seite mit der Aufbaufläche 5 oder der der Aufbaufläche 5 gegenüberliegenden Seite angeordnet.

Dabei wird die Sonotrode 12 durch den Schwingungskonverter 9, die zweite Sonotrode 44 als weitere Sonotrode 43 durch den zweiten Schwingungskonverter 40 als weiteren Schwingungskonverter 19, die dritte Sonotrode 45 als weitere Sonotrode 43 durch den dritten Schwingungskonverter 41 als weiteren Schwingungskonverter 19 und die vierte Sonotrode 46 als weitere Sonotrode 43 durch den vierten Schwingungskonverter 42 als weiteren Schwingungskonverter 19 zur mechanischen Schwingung 6 angeregt.

Der Schwingungserzeuger 4 mit den Sonotroden 12,44,45,46 erzeugt die an die Aufbauplatte 3 übertragene mechanische Schwingung 6 in der Schwingungsausrichtung 14 einer koaxialen Schwingung 18 gegenüber der zur Aufbaufläche 5 der Aufbauplatte 3 senkrecht stehenden Schwingungsachse 15. Die Schwingungsachse 15 ist die nicht materialisierte, gedachte Linie, welche lediglich zur Verdeutlichung der Schwingungsausrichtung 14 der Aufbauplatte 3 vorgesehen ist.

Da FIG 4 eine Draufsicht auf die Aufbaufläche 5 der Aufbauplatte 3 zeigt, ist die Schwingungsachse 15 ebenfalls nur in der Draufsicht visualisierbar.

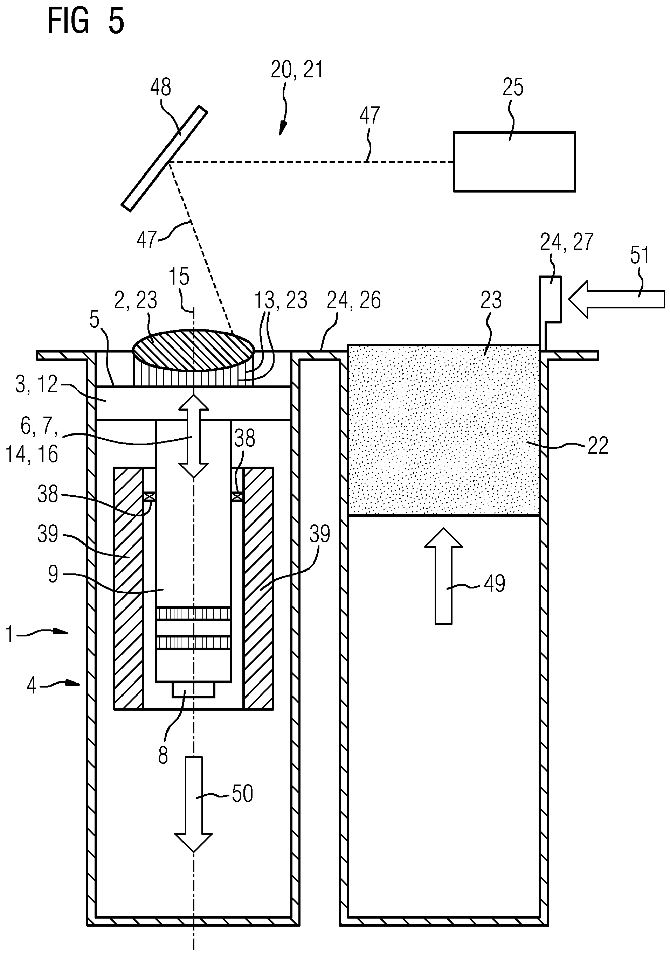

Mittels der FIG 5 erfolgt eine schematische Darstellung der erfindungsgemäßen additiven Fertigungsmaschine 20 zum selektiven Laserschmelzen 21 mit der Abtrennvorrichtung 1 nach FIG 1 bis FIG 4.

Im Gegensatz zu der Abtrennvorrichtung 1 in FIG 1 ist in FIG 5 die Aufbauplatte 3 als Sonotrode 12 ausgebildet. Auf den Schwingungstransformator wurde in diesem Ausführungsbeispiel verzichtet. Auch ist der Schwingungsgenerator 8 im Wesentlichen unmittelbar am Schwingungskonverter 9 angeordnet.

Somit wird die vom Schwingungskonverter 9 von der elektrischen Schwingung des Schwingungsgenerator 8 in die mechanische Schwingung 6 umgewandelte Ultraschallschwingung 7 an die als Sonotrode 12 ausgebildete Aufbauplatte 3 übertragen.

Im Ausführungsbeispiel der FIG 5 der Schwingungserzeuger 4 entgegen der FIG 1 mittels des Schwingungskonverters 9 über die Lagerungsvorrichtung 38 mit der Verankerungsvorrichtung 39 verbunden.

Ein Vorratsbehälter 22 ist mit dem Schmelzmedium 23 befüllt. Das Schmelzmedium 23 wird in einer ersten Produktionsrichtung 49 auf eine Transportplatte 26 des Transportmittels 24 bereitgestellt. Eine Verteilungseinheit 27 des Transportmittels 24 verteilt das Schmelzmedium 23 in einer dritten Produktionsrichtung 51 mittels der Transportplatte 26 schichtweise auf der Aufbaufläche 5 der Aufbauplatte 3.

Ein Lasererzeuger 25 erzeugt einen Laserstrahl 47, wobei der Laserstrahl 47 durch eine Ablenkvorrichtung 48 über vorbestimmte Stellen des Schmelzmediums 23 abgelenkt wird und an diesen Stellen das Schmelzmedium 23 schmilzt, so dass nach Abkühlung der geschmolzenen Schicht das Bauteil 2 und die Stützstruktur 13 schichtweise in der zweiten Produktionsrichtung 50 auf der Aufbaufläche 5 der Aufbauplatte 3 erzeugt werden. Überschüssiges, nicht geschmolzenes Schmelzmedium 23 wird oft nach Erzeugung des Bauteils 2 und vor Abtrennung des hier über die Stützstruktur 13 an der Aufbaufläche haftenden Bauteils 2 beispielsweise via Druckluft entfernt.

Mittels der Abtrennvorrichtung 1 wird das so erzeugte Bauteil 2 und die Stützstruktur 13 von der Aufbaufläche 5 der Aufbauplatte 3 abgetrennt.

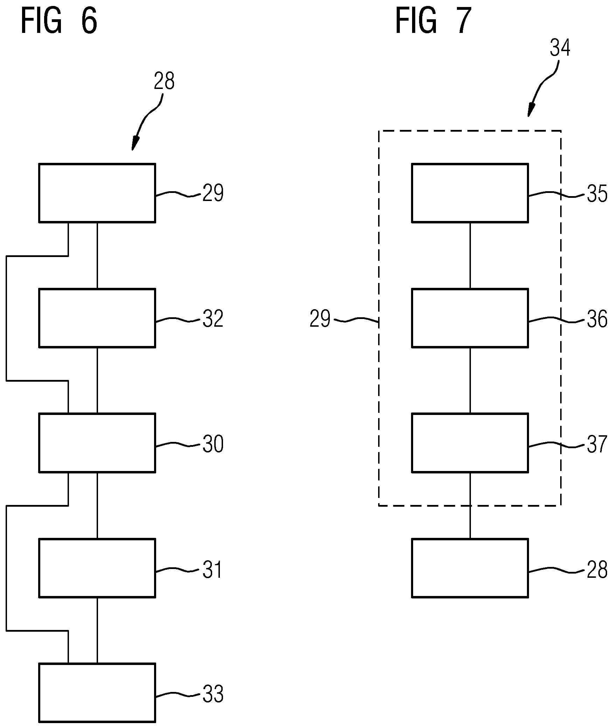

Die FIG 6 zeigt ein Struktogramm des erfindungsgemäßen Abtrennverfahrens 28 für die Abtrennvorrichtung nach FIG 1 bis FIG 4.

Im Schritt einer Bauteilherstellung 29 wird das Bauteil auf der Aufbaufläche der Aufbauplatte hergestellt, wobei das Bauteil an der Aufbaufläche haftet.

Falls die Stützstruktur vorgesehen ist, wird im Schritt einer Stützstrukturausbildung 32 die Stützstruktur an dem Bauteil ausgebildet und das Bauteil ist über die Stützstruktur mit der Aufbaufläche haftend verbunden.

Im Schritt einer Schwingungserzeugung 30 wird die mechanische Schwingung der Aufbauplatte auf Basis der elektrischen Schwingung mittels des Schwingungserzeugers erzeugt.

Im Schritt einer Bauteilabtrennung 31, wird das Bauteil von der Aufbaufläche mittels der mechanischen Schwingung abgetrennt.

Falls die Stützstruktur vorgesehen ist, wird im Schritt der Stützstrukturzerstörung 33 die Stützstruktur mittels der mechanischen Schwingung zerstört und das Bauteil von der Aufbaufläche abgetrennt.

Mit der FIG 7 wird ein Struktogramm des erfindungsgemäßen additiven Fertigungsverfahrens zum selektiven Laserschmelzen mit dem Abtrennverfahren nach FIG 6 für die additiven Fertigungsmaschine nach FIG 5 aufgezeigt.

Im Schritt eines Schmelzmitteltransports 35 wird das Schmelzmedium durch das Transportmittel vom Vorratsbehälter zur Aufbaufläche der Aufbauplatte transportiert.

Im Schritt einer Lasererzeugung 36 wird mittels des Lasererzeugers der Laserstrahl erzeugt.

Im Schritt einer Laserstrahlablenkung 37 wird mittels der Ablenkvorrichtung der Laserstrahl auf dem Schmelzmedium der Aufbaufläche abgelenkt und das Bauteil und, falls vorgesehen, die Stützstruktur hergestellt.

Die Schritte des Schmelzmitteltransports 35, der Lasererzeugung 36 und der Laserstrahlablenkung 37 werden während der Bauteilherstellung 29 durchgeführt.

Ist die Bauteilherstellung 29 beendet, erfolgt das Abtrennverfahren 28.

## Patentansprüche

1. Abtrennvorrichtung (1) zur Abtrennung eines mittels additiver Fertigung herstellbaren Bauteils (2) von einer Aufbauplatte (3), aufweisend die Aufbauplatte (3) und einen Schwingungserzeuger (4), wobei
- das Bauteil (2) auf einer Aufbaufläche (5) der Aufbauplatte (3) herstellbar und mit der Aufbaufläche (5) anhaftend verbindbar ist,
- die Aufbauplatte (3) mittels des Schwingungserzeugers (4) auf Basis einer elektrischen Schwingung in eine mechanische Schwingung (6) versetzbar ist und
- mittels der mechanischen Schwingung (6) das Bauteil (2) von der Aufbaufläche (5) abtrennbar ist.

2. Abtrennvorrichtung (1) nach Anspruch 1, wobei die elektrische Schwingung und die mechanische Schwingung (6) vom Schwingungserzeuger (4) als Ultraschallschwingungen (7) insbesondere in einem Frequenzbereich von 15kHz bis 60kHz erzeugbar sind.

3. Abtrennvorrichtung (1) nach einem der Ansprüche 1 oder 2, wobei der Schwingungserzeuger (4) einen elektrischen Schwingungsgenerator (8) zur Erzeugung der elektrischen Schwingung und einen Schwingungskonverter (9) zur Umwandlung der elektrischen Schwingung in die mechanische Schwingung (6) aufweist.

4. Abtrennvorrichtung (1) nach einem der vorhergehenden Ansprüche, wobei der Schwingungserzeuger (4) einen mechanischen Schwingungstransformator (10) zur Veränderung einer Schwingungsamplitude (11) der mechanischen Schwingung (6) insbesondere für einen Amplitudenbereich von 2µm bis 50pm aufweist.

5. Abtrennvorrichtung (1) nach einem der Ansprüche 3 oder 4, wobei der Schwingungserzeuger (4) eine Sonotrode (12) aufweist, welche ausgebildet ist, die mechanische Schwingung (6) von dem Schwingungskonverter (9) und, falls vorhanden, über den mechanischen Schwingungstransformator (10) an die Aufbauplatte (3) zu übertragen.

6. Abtrennvorrichtung (1) nach Anspruch 5, wobei die Aufbauplatte (3) als Sonotrode (12) ausgebildet ist.

7. Abtrennvorrichtung (1) nach einem der vorhergehenden Ansprüche, wobei eine Stützstruktur (13) an dem Bauteil (2) ausbildbar ist und das Bauteil (2) mittels der Stützstruktur (13) mit der Aufbaufläche (5) der Aufbauplatte (3) anhaftend verbindbar ist.

8. Abtrennvorrichtung (1) nach Anspruch 7, wobei die Stützstruktur (13) mittels der mechanischen Schwingung (6) zerstörbar und das Bauteil (2) von der Aufbaufläche (5) der Aufbauplatte (3) abtrennbar ist.

9. Abtrennvorrichtung (1) nach einem der Ansprüche 3 bis 8, wobei eine Schwingungsausrichtung (14) der mechanischen Schwingung (6) der Aufbauplatte (3) mittels Anordnung des Schwingungskonverters (9) oder, falls vorhanden, der Sonotrode (12) in Bezug auf eine zur Aufbaufläche (5) der Aufbauplatte (3) orthogonal ausgerichtete Schwingungsachse (15) in eine longitudinale Schwingung (16) oder in eine transversale Schwingung (17) oder in eine koaxiale Schwingung (18) erzeugbar ist.

10. Abtrennvorrichtung (1) nach einem der Ansprüche 3 bis 9, wobei der Schwingungserzeuger (4) mindestens einen weiteren Schwingungskonverter (19) zur Umwandlung der elektrischen Schwingung in die mechanische Schwingung (6) aufweist.

11. Additive Fertigungsmaschine (20) zum selektiven Laserschmelzen (21), mit
- einer Abtrennvorrichtung (1) nach einem der Ansprüche 1 bis 10,
- einem Vorratsbehälter (22) für ein Schmelzmedium (23),
- einem Transportmittel (24) zum Transport des Schmelzmediums (23) vom Vorratsbehälter (22) zur Aufbaufläche (5) der Aufbauplatte (3)
- einem Lasererzeuger (25) zur Erzeugung eines Laserstrahls (47) und
- einer Ablenkvorrichtung (48) zur Ablenkung des Laserstrahls (47) auf dem Schmelzmedium (23) der Aufbaufläche (5).

12. Additive Fertigungsmaschine (20) nach Anspruch 11, wobei das Transportmittel (24) eine Transportplatte (26) und eine Verteilungseinheit (27) für das Schmelzmedium (23) aufweist.

13. Abtrennverfahren (28) für eine Abtrennvorrichtung (1) nach einem der Ansprüche 1 bis 10, mit den Schritten
- einer Bauteilherstellung (29), wobei das Bauteil (2) auf der Aufbaufläche (5) der Aufbauplatte (3) hergestellt wird und an der Aufbaufläche (5) anhaftet,
- einer Schwingungserzeugung (30), wobei die mechanische Schwingung (6) der Aufbauplatte (3) auf Basis der elektrischen Schwingung mittels des Schwingungserzeugers (4) erzeugt wird, und
- einer Bauteilabtrennung (31), wobei das Bauteil (2) von der Aufbaufläche (5) mittels der mechanischen Schwingung (6) abgetrennt wird.

14. Abtrennverfahren (28) nach Anspruch 13, mit den Schritten
- einer Stützstrukturausbildung (32), wobei an dem Bauteil (2) die Stützstruktur (13) ausgebildet wird und das Bauteil (2) mittels der Stützstruktur (13) mit der Aufbaufläche (5) anhaftend verbunden ist, und
- einer Stützstrukturzerstörung (33), wobei die Stützstruktur (13) mittels der mechanischen Schwingung (6) zerstört und das Bauteil (2) von der Aufbaufläche (5) abgetrennt wird.

15. Additives Fertigungsverfahren (34) zum selektiven Laserschmelzen mit einem Abtrennverfahren (28) nach einem der Ansprüche 13 oder 14, für eine additive Fertigungsmaschine (20) nach einem der Ansprüche 11 oder 12, mit den Schritten während der Bauteilherstellung (29)
- eines Schmelzmitteltransports (35), wobei das Schmelzmedium (23) durch das Transportmittel (24) vom Vorratsbehälter (22) zur Aufbaufläche (5) der Aufbauplatte (3) transportiert wird,
- einer Lasererzeugung (36), wobei mittels des Lasererzeugers (25) der Laserstrahl (47) erzeugt wird, und
- einer Laserstrahlablenkung (37), wobei mittels einer Ablenkvorrichtung (48) der Laserstrahl (47) auf dem Schmelzmedium (23) der Aufbaufläche (5) abgelenkt und das Bauteil (2) und, falls vorgesehen, die Stützstruktur (13) hergestellt wird.
